# EUROPÄISCHE PATENTSCHRIFT

(11) **EP 1 295 688 B1**
(45) Veröffentlichungstag und Bekanntmachung des Hinweises auf die Patenterteilung: **15.02.2006**
(21) Anmeldenummer: 02090285.4
(22) Anmeldetag: 02.08.2002
(51) Int. Cl.: B26D 3/16

(54) **Vorrichtung sowie Verfahren zum Trennen von Rohren**
Apparatus and method for cutting tubes
Dispositif ainsi que procédé pour couper des tuyaux

(30) Priorität: 19.09.2001 DE 10147453; 22.07.2002 DE 10233856
(43) Veröffentlichungstag der Anmeldung: 26.03.2003
(73) Patentinhaber: Geberit Mapress GmbH, 40764 Langenfeld (DE)
(72) Erfinder: Speckemeyer, Jens, 45475 Mülheim (DE)
(74) Vertreter: Meissner, Peter E.

(56) Entgegenhaltungen:
- WO-A-81/00225
- DE-A- 2 159 744
- DE-A- 19 814 419
- US-A- 1 279 022
- US-A- 3 252 218
- US-A- 4 825 543

## Beschreibung

Die Erfindung betrifft eine Vorrichtung zum Trennen von Rohren gemäß dem Oberbegriff des Patentanspruches 1.

Aus der DE 196 37 688 A1 ist ein Verbundrohr bekannt, bestehend aus einem dünnwandigen Leitungsrohr aus Edelstahl, Kupfer oder Titan, das mit einer stoffschlüssigen Umhüllung aus Kunststoff, vorzugsweise Polyethylen oder Polypropylen, versehen ist.

Dieses bekannte Verbundrohr hat den Vorteil, dass man durch die Kunststoffumhüllung die Wanddicke des aus teuerem Material hergestellten Leitungsrohres reduzieren kann. In der Zwischenzeit ist es gelungen, die Wanddicke des Innenliners noch weiter zu reduzieren bis auf Werte < 0,2 mm. Dies hat den Vorteil, dass insbesondere bei einem Leitungsrohr aus Edelstahl das Verbundrohr im Abmessungsbereich bis 15 mm Außendurchmesser von Hand biegbar ist. Somit hat der Sanitär-Installateur die Möglichkeit ein solches Verbundrohr zu coilen und durch Abcoilen eine einfache Verlegung vom Verteiler bis zum Verbraucherendpunkt vorzunehmen.

Als schwierig hat sich aber das Trennen solcher Verbundrohre herausgestellt, da mit den bekannten Trennvorrichtungen zum Einen leicht Grate entstehen, die zu Verletzungen führen können und zum Anderen, insbesondere bei Dicken < 0,15 mm, die Gefahr des Einbeulens besteht.

Aus der DE-OS 2159744 ist eine Vorrichtung zum Schneiden von Rohren bekannt. Diese bekannte Vorrichtung besteht aus einem als Klemmelement ausgebildeten Spannrahmen, der längs einer Ebene in zwei Hälften unterteilt ist, die nach dem Schließen des Klemmelementes um ein zu schneidendes rohrförmiges Werkstück mit dessen Längsachse zusammenfällt.

Beide Hälften des Klemmelementes sind an der einen Kante durch einen Verschluss miteinander verbunden. Der Verschluss besteht aus einem Zapfen, der an einem Ende mit einer Klemmhälfte durch ein Gelenk verbunden ist, einer T-förmigen Spindel, die sich mit dem Zapfen im Gewindeeingriff befindet und einem gabelförmigen Anschlag, der von der anderen Klemmhälfte hervorspringt.

Das Trennwerkzeug ist mittels eines Trägers und eines Werkzeugblockes radial verschiebbar an einem Klemmelement angeordnet.

Die radiale Verstellung des Trennwerkzeuges erfolgt mittels einer in einer Mutter geführten Zustellschraube, die mit einem Handgriff verbunden ist.

Diese bekannte Vorrichtung ist für das Trennen von im Durchmesser großer und dickwandiger Rohre konstruiert, bei dem große Schneidkräfte auftreten, die durch eine Befestigung eines Klemmelementes, z. B. an einer Werkbank, abgefangen werden müssen.

Die Drehbewegung des Trennwerkzeuges gegenüber dem Klemmelement ist nur über eine aufwendige Führung des Trägers möglich. Die Eindringtiefe des Trennwerkzeuges kann nur über ein Drehen der Zustellschraube verändert werden.

Eine solche Vorrichtung ist für ein schnelles und problemloses Trennen von im Durchmesser kleinen und dünnwandigen Rohren direkt an der Baustelle nicht geeignet.

Aufgabe der Erfindung ist es, eine ausschließlich manuell zu betätigende Vorrichtung zum Trennen von Rohren, insbesondere von Verbundrohren anzugeben, mit der auch Rohre bzw. Innenliner mit Wanddicken < 0,2 mm, insbesondere < 0,15 mm, einfach und problemlos durchtrennt werden können.

Diese Aufgabe wird ausgehend vom Oberbegriff in Verbindung mit den kennzeichnenden Merkmalen des Anspruches 1 gelöst. Vorteilhafte Weiterbildungen sind Bestandteil von Unteransprüchen.

Nach der Lehre der Erfindung sind beide Backenhälften auf der dem Gelenk gegenüberliegenden Seite je mit einem einen Handgriff bildenden Arm versehen.

Im Unterschied zum bekannten Stand der Technik ist die Eindringtiefe des Trennmessers abhängig vom Grad des von einer "Offen-" in eine "Geschlossen-Position" bringbaren Werkzeuges, wobei der Spitzenbereich des Trennmessers über der Innenseite der Backenhälfte hervorsteht.

Die vorgeschlagene Vorrichtung hat den Vorteil, dass das Werkzeug manuell zu betätigen ist und keine Abstützung an einem Halteelement benötigt.

Die Eindringtiefe des Trennmessers kann in einfacher Weise durch Änderung des Grades der Schließ-Position des Werkzeuges verändert werden. Ein umständliches Drehen einer Spindel ist dazu nicht erforderlich.

Damit beim Drehen des Werkzeuges in der "Geschlossen-Position" nicht versehentlich das Werkzeug aufspringt, ist nach einem weiteren Merkmal der Erfindung das Werkzeug mit einem Sperrriegel versehen.

Für das Trennen von Verbundrohren, bestehend aus einem metallischen Innenliner und einer Kunststoffummantelung, kann es von Vorteil sein, wenn das Werkstück mit einem Riegelelement, zur Aufrechterhaltung der Position "Teilgeschlossen" versehen ist. Vorzugsweise kann man beide Funktionen zur Aufrechterhaltung der Position "Teilgeschlossen" und "Geschlossen" in einem einzigen Element in Form eines verschiebbaren Riegels realisieren.

Die beiden Backenhälften sind je mit einem Trennmesser versehen, die in der "Geschlossen-Position" des Werkzeuges einander gegenüberstehen.

Der Spitzenbereich des Trennmesser ist dabei als vierseitige reguläre Pyramide ausgebildet wobei zwei einander gegenüberliegende Seitenkanten in der Trennebene liegen.

Diese Ausbildung hat den Vorteil, dass das Trennmesser sowohl zum Durchstoßen als auch zum Schneiden geeignet ist. Dies gelingt dann besonders gut, wenn die in der Trennebene liegende Diagonale mindestens viermal so lang ist, wie die senkrecht dazu liegende Diagonale.

Für das Durchtrennen von Verbundrohren, d. h. Rohre bestehend aus einem metallischen Innenliner und einer äußeren Kunststoffumhüllung, hat sich eine Ausführungsform als besonders geeignet herausgestellt, bei der in der gleichen Ebene der Trennmesser in jeder Backe mindestens eine Klinge angeordnet ist, deren Spitzenbereich über der Innenseite der Backe hervorsteht. Vorzugsweise ist jede Backe mit zwei Klingen versehen, die jeweils rechts und links vom Trennmesser angeordnet sind. Für das Einschneiden in die Kunststoffumhüllung ist ein Ende jeder Klinge als rechtwinklige Eckkante ausgebildet, wobei in der Position "Geschlossen" die Eckkanten beider Klingenpaare einander gegenüberstehen.

Eine gute Anpassung an das zu durchtrennende Rohr ist dann gegeben, wenn die dem Rohr zugewandte Seite der Klinge gebogen ist. Aus Gründen einer einfacheren Herstellung wird alternativ dazu eine gerade Klinge vorgeschlagen, die tangential liegend in der Backenhälfte befestigt ist.

Für das schnelle und problemlose Auswechseln verschlissener Trennmesser bzw. Klingen sind diese nach einem weiteren Merkmal der Erfindung als Einzelelemente ausgebildet. Zur Befestigung weist eine Frontseite der Backenhälfte eine Ausnehmung auf, die mit Vorsprüngen und Gewindebohrungen versehen sind, wobei die Höhe der Vorsprünge mindestens der Dicke der Trennmesser und Klingen entspricht.

Um die Trennmesser und Klingen problemlos befestigen zu können, weisen diese in beiden Endbereichen je eine Ausnehmung zur teilweisen Umfassung der Vorsprünge auf.

Zur Vermeidung von Spannungsspitzen in den Trennwerkzeugen werden diese nach einem weiteren Merkmal der Erfindung mit einem radial verlaufenden Schlitz versehen, so dass sie wie ein Federelement wirken. Der Schlitz mündet in einer eine große Quererstreckung aufweisenden Öffnung. Diese dient zum Durchstecken der Befestigungsschraube.

Bei Anwendung der vorgeschlagenen Vorrichtung hat es sich verfahrensmäßig als günstig herausgestellt, wenn das Trennmesser durch langsames Schließen und gleichzeitiges Drehen des Werkzeuges nur allmählich in die Wandung des Rohres bzw. der Kunststoffummantelung eindringt und diese durchtrennt.

Alternativ ist es auch möglich mit der Spitze der Trennmesser die Wandung zuerst zudurchstoßen und durch Drehen des geschlossenen Werkzeuges die Wandung aufzutrennen.

Für eine robuste Handhabung des Werkzeuges beim Trennen von Verbundrohren bietet es sich an, die Verriegelung in der Position "Teilgeschlossen" zur Anwendung zu bringen.
Dies hat den Vorteil, dass vermieden wird, durch unachtsames, hastiges Schließen des Werkzeuges die Wandung des metallischen Innenliners sofort mit zu durchstoßen.

Das sofortige Durchstoßen des metallischen Innenliners erschwert den Trennvorgang und kann im ungünstigsten Fall zum Abbruch des Vorganges führen, so dass der Trennvorgang wiederholt werden muss. Durch die Möglichkeit das Werkzeug in der Position "Teilgeschlossen" zu halten, wird ein sofortiges Durchstoßen des metallischen Innenliners vermieden und die durchtrennte Kunststoffummantelung kann ihre Funktion als Führungshilfe für das Trennmesser voll erfüllen.

Weitere Merkmale, Vorteile und Einzelheiten der Erfindung ergeben sich aus der nachfolgenden Beschreibung von einem in einer Zeichnung dargestellten Ausführungsbeispiel.

Es zeigen:
- **Figur 1 - 3**: in einer Vorder-, Seiten- und Rückansicht eine erfindungsgemäße Vorrichtung zum Trennen von Rohren,
- **Figur 4 - 6**: in einer Vorder-, Drauf- und Rückansicht die obere Backenhälfte des Werkzeuges,
- **Figur 7 - 9**: in einer Vorder-, Drauf- und Rückansicht die untere Backenhälfte des Werkzeuges,
- **Figur 10**: in einer Draufsicht das Trennmesser,
- **Figur 11**: Schnitt B - B in Figur 10,
- **Figur 12**: Schnitt C - C in Figur 10,
- **Figur 13**: in einer Draufsicht die Klinge,
- **Figur 14**: Schnitt A - A in Figur 12,
- **Figur 15**: Werkzeug in teilgeöffneter Position,

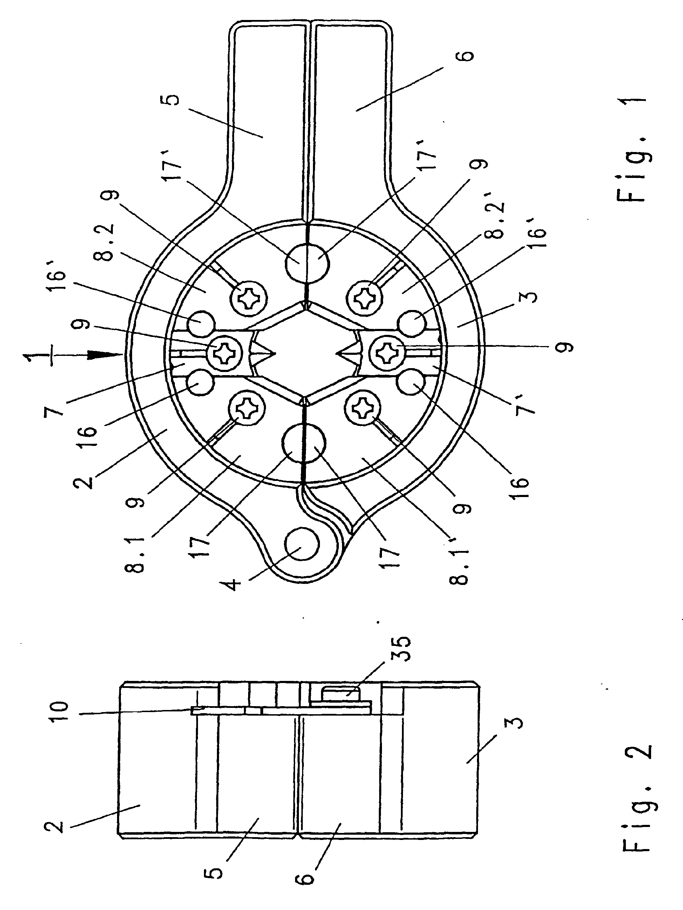

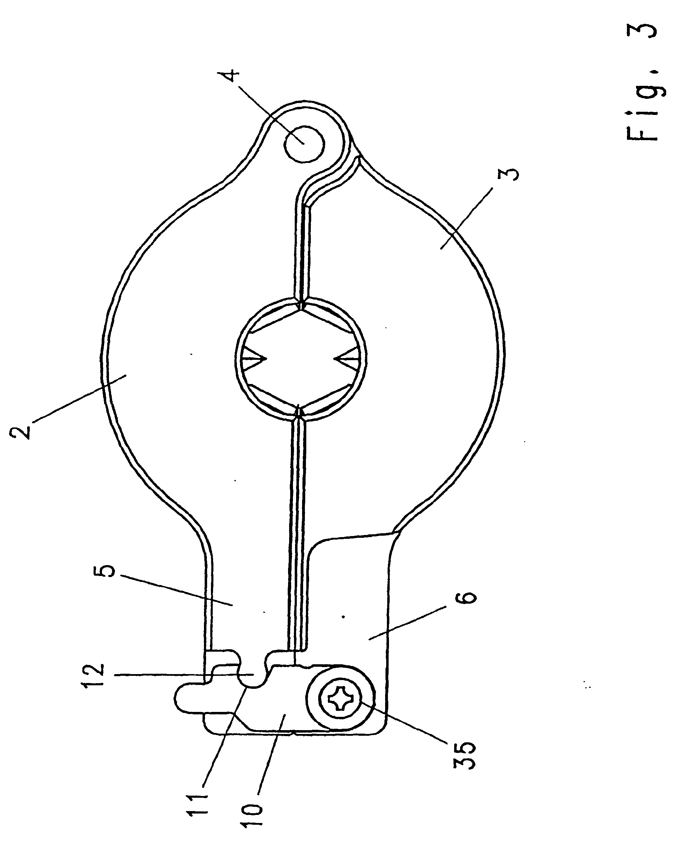

In **Figur 1 bis 3** sind in einer Vorder-, Seiten- und Rückansicht eine erfindungsgemäße Vorrichtung zum Trennen von Rohren dargestellt.

Das Werkzeug 1 besteht aus einer oberen Backenhälfte 2 und einer komplementär dazu ausgebildeten unteren Backenhälfte 3, die auf einer Seite über ein Gelenk 4 miteinander verbunden sind. Im Unterschied zum bekannten Stand der Technik geht jede Backenhälfte 2, 3 auf der dem Gelenk gegenüberliegenden Seite in einen Arm 5, 6 über.

Auf der in der Zeichenebene liegenden Frontseite beider Backenhälften 2, 3 ist das eigentliche Trennwerkzeug angeordnet. In diesem Ausführungsbeispiel besteht es aus je einem Trennmesser 7, 7' und zwei Klingen 8.1, 8.2, 8.1', 8.2', die jeweils rechts und links vom Trennmesser 7, 7' angeordnet sind.

Alle Elemente des Trennwerkzeuges sind mittels Schrauben 9 an der jeweiligen Backenhälfte 2, 3 auswechselbar befestigt.

Um das Werkzeug 1 in der "Geschlossen-Position" fixieren zu können, ist auf der Rückseite der unteren Backenhälfte 3 ein schwenkbarer Sperriegel 10 befestigt. Dieser greift mit einer Ausnehmung 11 in einen nasenförmigen Vorsprung 12 der oberen Backenhälfte 2 ein.

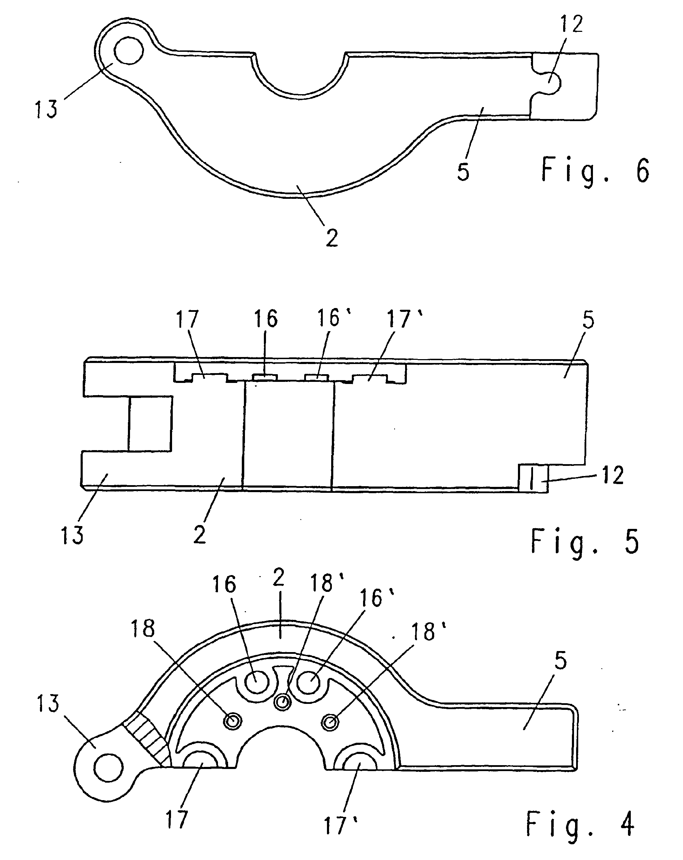

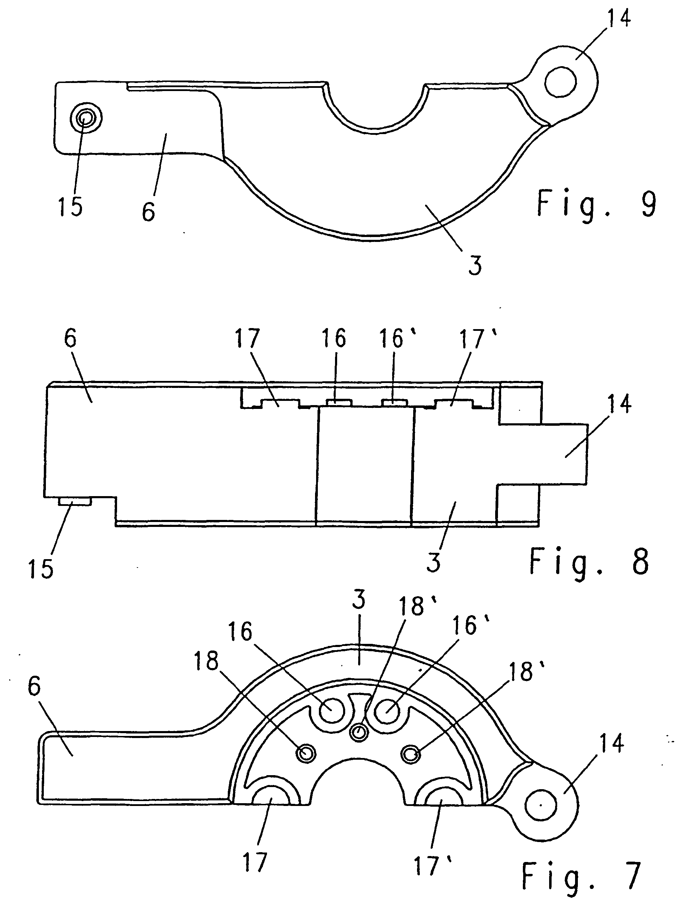

In einer Vorder-, Drauf- und Rückansicht ist in den **Figuren 4 - 6** die obere 2 und in den **Figuren 7 - 9** die untere Backenhälfte 3 dargestellt.

Die in **Figur 1** allgemein als Gelenk 4 bezeichnete scharnierartige Verbindung der beiden Backenhälften 2, 3 setzt sich zusammen aus einer Gabel 12 der oberen Backenhälfte 2 und einem passend dazu ausgebildeten Zapfen 14 der unteren Backenhälfte 3 sowie einem hier nicht dargestellten Durchsteckbolzen.

Zur Befestigung des Sperrriegels 10 (**Figur 2**) ist im Endbereich des Armes 6 der unteren Backenhälfte 3 eine Gewindebohrung 15 angeordnet.

Eine Frontseite der beiden Backenhälften 2, 3 ist mit zwei zapfenartigen Vorsprüngen 16, 16', zwei halbkreisförmigen Vorsprüngen 17, 17' sowie drei Gewindebohrungen 18, 18', 18" zur Befestigung der Elemente des Trennwerkzeuges versehen. Die Höhe der Vorsprünge 16, 16', 17, 17' entspricht mindestens der Dicke der Elemente des Trennwerkzeuges.

Um Gewicht zu sparen und das Werkzeug leicht händelbar zu machen, werden beide Backenhälften 2, 3 vorzugsweise aus einem schlagfesten Kunststoff, wie z. B. PVC hergestellt.

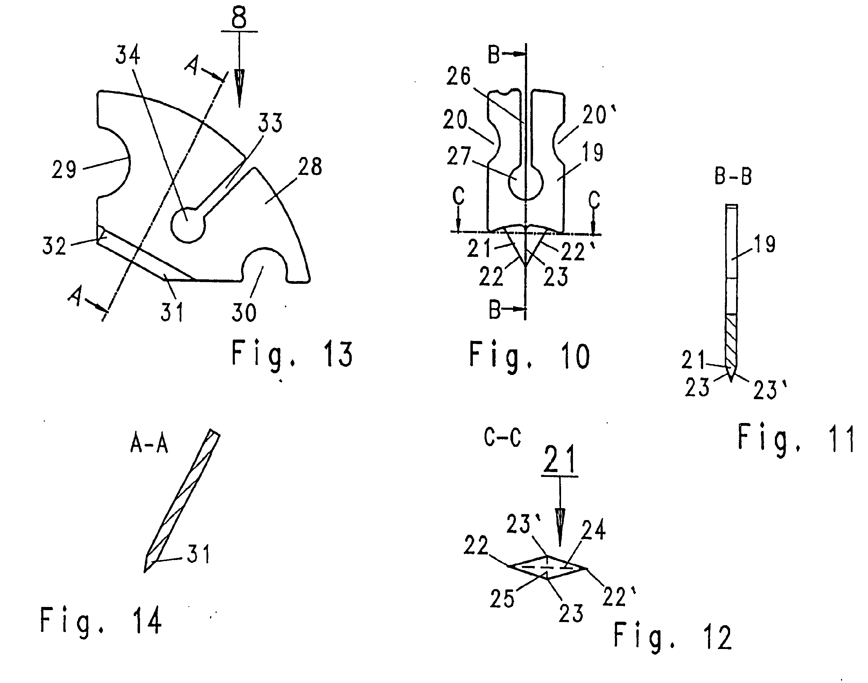

Die **Figur 10 - 12** zeigen die Einzelheiten des Trennmessers 7. Es besteht aus einem etwa 1 mm dicken rechteckigen Stahlblech 19, das an den beiden Längsseiten mit je einer sichelförmigen Ausnehmung 20, 20' versehen ist.

Am fußseitigen Ende ist das Trennmesser 7 mit einer zum Durchstoßen und Trennen geeigneten Spitze 21 versehen. Vorzugsweise ist die Spitze 21 als vierseitige reguläre Pyramide ausgebildet, wobei zwei Seitenkanten 22, 22' in der Trennebene liegen.

Der Winkel zwischen den beiden in der Trennebene liegenden Seitenkanten 22, 22' beträgt vorzugsweise 60°, während die senkrecht dazu liegenden Seitenkanten 23, 23' einen Winkel von 40°einschließen.

Die in der Trennebene liegende Diagonale 24 der Pyramide ist mindestens viermal so lang wie die senkrecht dazu liegende Diagonale 25.
Das Stahlblech 19 ist mit einem radial verlaufenden Schlitz 26 versehen, der in einer Öffnung 27 zum Durchstecken der Befestigungsschraube 9 mündet.

Die **Figuren 13 und 14** zeigen die Einzelheiten der Klinge 8. Sie besteht ebenfalls aus einem etwa 1 mm dicken Stahlblech 28 - etwa in der Form eines Viertel-Segmentes.

In den beiden Endseiten ist je eine Ausnehmung 29, 30 angeordnet zur teilweisen Umfassung der zapfenförmigen Vorsprünge 16 bzw. halbkreisförmigen Vorsprünge 17.

Auf der Innenseite ist eine tangential liegende Spitze 31 angeordnet, die im Querschnitt als gleichschenkliges Dreieck mit einem Winkel von 40° ausgebildet ist.

Auf der der Trennebene des Werkzeuges 1 zugewandten Seite ist die Spitze mit einer etwa rechtwinkligen Eckkante 32 versehen. Das Stahlblech 28 ist ebenfalls mit einem radial verlaufenden Schlitz 33 versehen, der in eine Öffnung 34 zur Aufnahme der Befestigungsschraube 9 mündet.

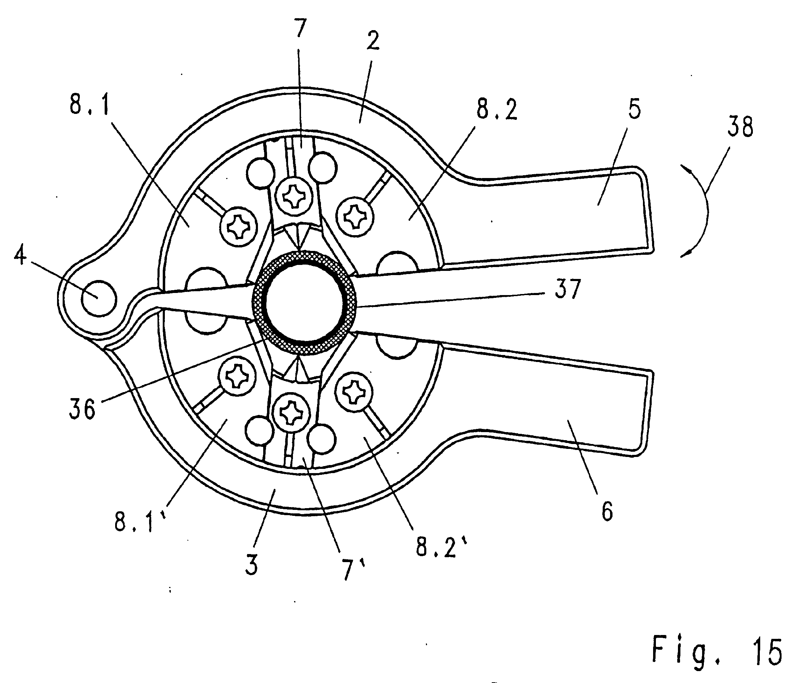

Anhand der Darstellung gemäß **Figur 15** wird die Funktionsweise der erfindungsgemäßen Trennvorrichtung näher erläutert. In einem vorgeschalteten Schritt wurde das zu trennende Verbundrohr, bestehend aus einem metallischen Innenliner 37 - vorzugsweise aus Edelstahl - und einer Kunststoffumhüllung 36 in das geöffnete Werkzeug 1 eingelegt. Zur besseren Erkennbarkeit ist der Innenliner 37 übertrieben dick dargestellt, in Wirklichkeit beträgt die Dicke des Innenliners 37 weniger als 0,15 mm.

Durch langsames Schließen des Werkzeuges 1 kommen als erstes die Eckkanten 32 **(Figur 13)** der Klingen 8 in Eingriff und dringen in die Kunststoffhülle 36 des Verbundrohres ein. Schwenkt man entsprechend dem Pfeil 38 das Werkzeug um das Verbundrohr herum, dann schneiden die Klingen 8 die Kunststoffumhüllung 36 teilweise auf. Schließt man das Werkzeug 1 weiter, dann kommt erstmalig auch der vordere Bereich der Spitze 21 (**Figur 10**) der Trennmesser 7 in Eingriff und unterstützen die Klingen 8 beim Aufschneiden der Kunststoffumhüllung 36.

Alternativ kann man die Positionierung von Trennmesser 7 zur Klinge 8 auch so wählen, dass die Klingen 8 allein die Kunststoffumhüllung 36 vollständig aufschneiden.

Wird das Werkzeug 1 noch weiter geschlossen, dann durchstoßen die Spitzen 21 der Trennmesser 7 die Wandung des metallischen Innenliners 37. Abschließend wird das Werkzeug 1 gemäß Pfeil 38 geschwenkt und die Trennmesser 7 schneiden den Innenliner 37 auf, so dass die gewünschte Abtrennung vollzogen ist.

Alternativ kann der letzte Arbeitsschritt auch so vollzogen werden, dass beim Kontaktieren der Spitzen 21 der Trennmesser 7 mit der Oberfläche des Innenliners 37 das Werkzeug 1 gleichzeitig geschwenkt und weiter geschlossen wird, so dass die Trennmesser 7 nur allmählich in die Wandung des Innenliners 37 eindringen.

### Bezugszeichenliste

| **Nr.** | **Bezeichnung** |
|---|---|
| 1 | Werkzeug |
| 2 | obere Backenhälfte |
| 3 | untere Backenhälfte |
| 4 | Gelenk |
| 5 | Arm obere Backenhälfte |
| 6 | Arm untere Backenhälfte |
| 7, 7' | Trennmesser |
| 8.1; 8.1'; 8.2; 8.2' | Klinge |
| 9 | Befestigungsschraube |
| 10 | Sperrriegel |
| 11 | Ausnehmung Sperrriegel |
| 12 | nasenförmiger Vorsprung, obere Backenhälfte |
| 13 | Gabel, obere Backenhälfte |
| 14 | Zapfen, untere Backenhälfte |
| 15 | Gewindebohrung, untere Backenhälfte |
| 16, 16' | zapfenartiger Vorsprung |
| 17, 17' | halbkreisförmiger Vorsprung |
| 18, 18', 18" | Gewindebohrung |
| 19 | Stahlblech (Trennmesser) |
| 20, 20' | Ausnehmung |
| 21 | Spitze Trennmesser |
| 22, 22' | Seitenkante (Trennmesser) |
| 23, 23' | Seitenkante |
| 24 | Diagonale (Trennebene) |
| 25 | Diagonale (senkrecht zur Trennebene) |
| 26 | Schlitz (Trennmesser) |
| 27 | Öffnung (Trennmesser) |
| 28 | Stahlblech (Klinge) |
| 29, 30 | Ausnehmung |
| 31 | Spitze Klinge |
| 32 | Eckkante |
| 33 | Schlitz |
| 34 | Öffnung |
| 35 | Befestigungsschraube |
| 36 | Kunststoffumhüllung |
| 37 | Innenliner |
| 38 | Schwenkbewegung |

## Patentansprüche

1. Vorrichtung zum Trennen von Rohren mit einem das Rohr umfassenden und relativ dazu in Umfangsrichtung verdrehbaren Werkzeug (1), bestehend aus zwei an einer Seite durch ein Gelenk (4) miteinander verbundenen, komplementär ausgebildeten Backenhälften (2, 3) und mindestens einem an einer Backenhälfte (2, 3) radial angeordneten Schneidmesser, das mit mindestens einer Seitenschneide versehen ist, wobei beide Backenhälften (2, 3) auf der dem Gelenk gegenüberliegenden Seite je mit einer Betätigungsvorrichtung versehen sind und die Eindringtiefe des Schneidmessers abhängig ist vom Grad des von einer "Offen-" in eine "Geschlossen-Position" bringbaren Werkzeuges (1), wobei der Spitzenbereich des Schneidmessers über der Innenseite der Backenhälfte (2, 3) hervorsteht und das Werkzeug mit einem Zuhaltemittel zur Aufrechterhaltung der Position "Geschlossen" versehen ist,
**dadurch gekennzeichnet,**
**dass** die Betätigungsvorrichtung als einen Handgriff bildender Arm (5, 6) der jeweiligen. Backenhälfte (2, 3) und das Schneidmesser als Trennmesser (7, 7') ausgebildet sind, dass der Spitzenbereich des Trennmessers (7, 7') als vierseitige reguläre Pyramide ausgebildet ist, wobei zwei einander gegenüber liegende Seitenkanten (22, 22') in der Trennebene liegen und die in der Trennebene liegende Diagonale (24) der Grundfläche der Pyramide mindestens 4-fach so lang ist wie die senkrecht dazu liegende Diagonale (25).

2. Vorrichtung nach Anspruch 1
**dadurch gekennzeichnet,**
**dass** das Zuhaltemittel als Sperrriegel (10) ausgebildet ist.

3. Vorrichtung nach Anspruch 1 und 2
**dadurch gekennzeichnet,**
**dass** der Sperrriegel (10) schwenkbar an einem Arm (6) des Werkzeuges (1) befestigt ist und eine Ausnehmung (11) aufweist, die in einen am anderen Arm (5) angeordneten nasenförmigen Vorsprung (12) einschwenkbar ist.

4. Vorrichtung nach einem der Ansprüche 1 bis 3
**dadurch gekennzeichnet,**
**dass** das Werkzeug mit einem Riegelelement versehen ist zur Aufrechterhaltung der Position "Teilgeschlossen".

5. Vorrichtung nach den Ansprüchen 1 bis 4
**dadurch gekennzeichnet,**
**dass** das Riegelelement und das Zuhaltemittel ein zusammenwirkendes Funktionselement bilden.

6. Vorrichtung nach einem der Ansprüche 1 bis 5
**dadurch gekennzeichnet,**
**dass** in jeder Backenhälfte (2, 3) ein Trennmesser (7, 7') angeordnet ist.

7. Vorrichtung nach Anspruch 6
**dadurch gekennzeichnet,**
**dass** in der Position "Geschlossen" die beiden Trennmesser (7, 7') einander gegenüberstehen.

8. Vorrichtung nach einem der Ansprüche 1 bis 7
**dadurch gekennzeichnet,**
**dass** in der gleichen Ebene der Trennmesser (7, 7') in jeder Backenhälfte (2, 3) mindestens eine Klinge (8) angeordnet ist, deren Spitzenbereich (31) über der Innenseite der Backenhälfte (2, 3) hervorsteht.

9. Vorrichtung nach Anspruch 8
**dadurch gekennzeichnet,**
**dass** jede Backenhälfte (2, 3) mit zwei Klingen (8.1, 8.1', 8.2, 8.2') versehen ist, die jeweils rechts und links vom Trennmesser (7, 7') angeordnet sind.

10. Vorrichtung nach Anspruch 8 und 9
**dadurch gekennzeichnet,**
**dass** im Querschnitt der Spitzenbereich (31) jeder Klinge (8) als gleichschenkliges Dreieck ausgebildet ist.

11. Vorrichtung nach den Ansprüchen 8 bis 10
**dadurch gekennzeichnet,**
**dass** ein Ende der Klinge (8) als rechtwinklige Eckkante (32) ausgebildet ist.

12. Vorrichtung nach Anspruch 11
**dadurch gekennzeichnet,**
**dass** in der Position "Geschlossen" die Eckkanten (32) der beiden Klingenpaare (8.1, 8.1', 8.2, 8.2') einander gegenüberstehen.

13. Vorrichtung nach einem der Ansprüche 8 bis 12
**dadurch gekennzeichnet,**
**dass** Trennmesser (7) und Klingen (8) als auswechselbare und befestigbare Einzelelemente ausgebildet sind.

14. Vorrichtung nach einem der Ansprüche 8 bis 13
**dadurch gekennzeichnet,**
**dass** eine Frontseite jeder Backenhälfte (2, 3) eine Ausnehmung aufweist, die mit Vorsprüngen (16, 17) und Gewindebohrungen (18) versehen sind.

15. Vorrichtung nach einem der Ansprüche 8 bis 14
**dadurch gekennzeichnet,**
**dass** die Höhe der Vorsprünge (16, 17) mindestens der Dicke der Trennmesser (7) und Klingen (8) entspricht.

16. Vorrichtung nach einem der Ansprüche 8 bis 15
**dadurch gekennzeichnet,**
**dass** die Trennmesser (7) und Klingen (8) in beiden Endbereichen je eine Ausnehmung (29, 30) aufweisen zur teilweisen Umfassung der Vorsprünge (16, 17).

17. Vorrichtung nach einem der Ansprüche 8 bis 16
**dadurch gekennzeichnet,**
**dass** jedes Trennmesser (7) und jede Klinge (8) mit einem radial verlaufenden Schlitz (33) versehen ist.

18. Vorrichtung nach Anspruch 17
**dadurch gekennzeichnet,**
**dass** der Schlitz (33) in einer eine größere Quererstreckung aufweisenden Öffnung (34) mündet.

19. Verfahren zum Trennen von Rohren unter verwendung einer Vorrichtung gemäß den Ansprüchen 1 bis 7
**dadurch gekennzeichnet,**
**dass** in einem ersten Schritt das Rohr in das geöffnete Werkzeug gelegt und durch langsames Schließen die Spitze des bzw. der Trennmesser die Oberfläche des Rohres kontaktiert und in einem zweiten Schritt durch Schließen des Werkzeuges die Spitze der Trennmesser die Wandung des Rohres durchstößt und nach Verriegelung des Werkzeuges abschließend in einem dritten Schritt das geschlossene Werkzeug um das Rohr gedreht und dabei das Rohr durchtrennt wird.

20. Verfahren nach Anspruch 19
**dadurch gekennzeichnet,**
**dass** in einem ersten Schritt das Rohr in das geöffnete Werkzeug gelegt und durch langsames Schließen die Spitze des bzw. der Trennmesser die Oberfläche des Rohres kontaktiert und in einem zweiten Schritt durch gleichzeitiges Schließen und Drehen des Werkzeuges die Spitze der Trennmesser kontinuierlich in die Wandung des Rohres eindringt und diese gleichzeitig durchtrennt.

21. Verfahren nach Anspruch 19
**dadurch gekennzeichnet,**
**dass** bei einem kunststoffummantelten Rohr in einem ersten Schritt das Verbundrohr in das geöffnete Werkzeug gelegt und durch langsames Schließen die Spitze des bzw. der Trennmesser die Oberfläche der Kunststoffummantelung kontaktiert und durch weiteres Schließen des Werkzeuges diese durchstößt und in einem zweiten Schritt durch Drehen des teilgeschlossenen Werkzeuges die Kunststoffummantelung durchtrennt wird und in einem dritten Schritt durch Schließen des Werkzeuges die Spitze des bzw. der Trennmesser die Wandung des Innenliners durchstößt und nach Verriegelung des Werkzeuges abschließend in einem vierten Schritt das geschlossene Werkzeug um das Verbundrohr gedreht und dabei der Innenliner durchtrennt wird, wobei die Nut der durchtrennten Kunststoffummantelung als Führung dient.

22. Verfahren nach Anspruch 20
**dadurch gekennzeichnet,**
**dass** bei einem kunststoffummantelten Rohr in einem ersten Schritt das Verbundrohr in das geöffnete Werkzeug gelegt und durch langsames Schließen und gleichzeitiges Drehen des Werkzeuges die Spitze des bzw. der Trennmesser in die Kunststoffummantelung eindringt und diese gleichzeitig durchtrennt und in einem zweiten Schritt durch weiteres Schließen und gleichzeitiges Drehen des Werkzeuges die Spitze des bzw. der Trennmesser in die Wandung des Innenliners eindringt und diese gleichzeitig durchtrennt.

23. Verfahren zum Trennen von Rohren mit einer Vorrichtung gemäß den Ansprüchen 8 bis 18
**dadurch gekennzeichnet,**
**dass** bei einem kunststoffummantelten Rohr nach dem Einlegen in das Werkzeug und langsamen Schließen im ersten Schritt die Eckkante(n) der Klinge(n) die Kunststoffummantelung durchstößt und in einem zweiten Schritt durch Drehen des teilgeschlossenen Werkzeuges die Kunststoffummantelung durchtrennt wird und im dritten Schritt durch Schließen des Werkzeuges die Spitze des bzw. der Trennmesser die Wandung des Innenliners durchstößt und nach Verriegelung des Werkzeuges abschließend in einem vierten Schritt das geschlossene Werkzeug um das Rohr gedreht und dabei der Innenliner durchtrennt wird, wobei die Nut der durchtrennten Kunststoffummantelung und die darin gleitenden Klingen als Führung dienen.

24. Verfahren nach Anspruch 23
**dadurch gekennzeichnet,**
**dass** bei einem kunststoffummantelten Rohr in einem ersten Schritt das Verbundrohr in das geöffnete Werkzeug gelegt und durch langsames Schließen die Eckkante(n) der Klinge(n) die Kunststoffummantelung durchstößt und in einem zweiten Schritt durch Drehen des teilgeschlossenen Werkzeuges die Kunststoffummantelung durchtrennt wird und im zweiten Schritt durch langsames Schließen und gleichzeitiges Drehen des Werkzeuges die Spitze des bzw. der Trennmesser in die Wandung des Innenliners eindringt und diesen gleichzeitig durchtrennt, wobei die Nut der durchtrennten Kunststoffummantelung für die darin gleitenden Klingen als Führung dient.

25. Verfahren nach den Ansprüchen 21 bis 24
**dadurch gekennzeichnet,**
**dass** nach dem Durchdringen der Kunststoffummantelung das teilgeschlossene Werkzeug in dieser Position gehalten und nach Durchtrennen der Kunststoffummantelung die Verriegelung der teilgeschlossenen Position aufgehoben wird.

## Claims

1. Device for cutting tubes, with a tool (1) which encircles the tube and can be rotated relative to it around the circumference, and which consists of two complementary half-jaws (2, 3) that are connected to each other at one side by a joint (4), and of at least one cutting knife positioned radially on one half-jaw (2, 3), which knife has at least one side cutter, each of the half-jaws (2, 3) having, on the side opposite to the joint, an operating device, and the penetration depth of the cutting knife being dependent on the amount by which the tool (1) is taken from an "open" position to a "closed" position, the tip area of the cutting knife protruding above the inner side of the half-jaw (2, 3), and the tool being fitted with a locking means to hold the "closed" position,
**characterised in that**
the operating device is in the form of an arm (5, 6) of each half-jaw (2, 3) that forms a handle, and the cutting knife is in the form of a splitting knife (7, 7'), **in that** the tip area of the splitting knife (7, 7') is in the form of a four-sided regular pyramid, wherein two lateral edges (22, 22') that are opposite to each other lie in the separation plane, and the diagonal (24) of the base of the pyramid lying in the separation plane is at least four times as long as the diagonal (25) which is at right angles to it.

2. Device as in claim 1,
**characterised in that**
the locking means is in the form of a locking catch (10).

3. Device as in claim 1 and 2,
**characterised in that**
the locking catch (10) is secured on one arm (6) of the tool (1) in such a way that it can be swivelled, and has a recess (11) which can be swivelled into a stud-like projection (12) positioned on the other arm (5).

4. Device as in one of claims 1 to 3,
**characterised in that**
the tool has a bolt element to hold the "part-closed" position.

5. Device as in one of claims 1 to 4,
**characterised in that**
the bolt element and the locking means form a functional element operating together.

6. Device as in one of claims 1 to 5,
**characterised in that**
there is a splitting knife (7, 7') in each half-jaw (2, 3).

7. Device as in claim 6,
**characterised in that**
the two splitting knives (7, 7') are opposite each other when in the "closed" position.

8. Device as in one of claims 1 to 7,
**characterised in that**
there is, in the same plane as the splitting knives (7, 7'), at least one blade (8) in each half-jaw (2, 3), the tip area (31) of which blade protrudes above the inner side of the half-jaw (2, 3).

9. Device as in claim 8,
**characterised in that**
each half-jaw (2, 3) has two blades (8.1, 8.1', 8.2, 8.2'), which are positioned at the right and left sides of each splitting knife (7, 7').

10. Device as in claims 8 and 9,
**characterised in that**,
in cross-section, the tip area (31) of each blade (8) is in the form of an isosceles triangle.

11. Device as in claims 8 to 10,
**characterised in that**
one end of the blade (8) is in the form of a right-angled corner edge (32).

12. Device as in claim 11,
**characterised in that**,
in the "closed" position, the corner edges (32) of the two pairs of blades (8.1, 8.1', 8.2, 8.2') are opposite each other.

13. Device as in one of claims 8 to 12,
**characterised in that**
the splitting knives (7) and blades (8) are in the form of replaceable and securable single elements.

14. Device as in one of claims 8 to 13,
**characterised in that**
one face of each half-jaw (2, 3) has a recess fitted with projections (16, 17) and threaded holes (18).

15. Device as in one of claims 8 to 14,
**characterised in that**
the depth of the projections (16, 17) is at least the same as the thickness of the splitting knives (7) and blades (8).

16. Device as in one of claims 8 to 15,
**characterised in that**
the splitting knives (7) and blades (8) each have a recess (29, 30) in both end areas to partly encircle the projections (16, 17).

17. Device as in one of claims 8 to 16,
**characterised in that**
each splitting knife (7) and each blade (8) has a slot (33) that runs radially.

18. Device as in claim 17,
**characterised in that**
the slot (33) opens out into an opening (34) that has a greater transverse width.

19. Method of cutting tubes using a device in accordance with claims 1 to 7,
**characterised in that**
in a first stage the tube is placed into the opened tool, and by a slow closing action the tips of the splitting knife or knives are brought into contact with the surface of the tube, and in a second stage, by closing the tool the tips of the splitting knives puncture the wall of the tube, and finally, after locking the tool, in a third stage the closed tool is rotated around the tube, thereby cutting through the tube.

20. Method as in claim 19,
**characterised in that**
in a first stage the tube is placed into the opened tool, and by a slow closing action the tips of the splitting knife or knives are brought into contact with the surface of the tube, and in a second stage, by simultaneously closing and turning the tool the tips of the splitting knives continuously cut into the wall of the tube and simultaneously cut through it.

21. Method as in claim 19,
**characterised in that**
in the case of a plastic-covered tube, in a first stage the composite tube is placed in the opened tool and, by a slow closing action, the tips of the splitting knife or knives are brought into contact with the surface of the plastic covering and, as a result of closing the tool further, puncture this surface, and in a second stage, by rotating the partly closed tool the plastic covering is cut through, and in a third stage, by closing the tool the tips of the splitting knife or knives puncture the wall of the inner liner and, after locking the tool, finally in a fourth stage the closed tool is rotated around the composite tube, thereby cutting through the inner liner, the channel that was cut through the plastic covering acting as a guide.

22. Method as in claim 20,
**characterised in that**
in the case of a plastic-covered tube, in a first stage the composite tube is placed in the open tool and, by the slow closing and simultaneous rotating of the tool, the tips of the splitting knife or knives cut into the plastic covering and simultaneously cut through it, and in a second stage, by closing the tool further and simultaneously rotating it, the tips of the splitting knife or knives cut into the wall of the inner liner and simultaneously cut through it.

23. Method for cutting tubes using a device in accordance with claims 8 to 18,
**characterised in that**
in the case of a plastic-covered tube, after placing it into the tool and slowly closing same, in a first stage the corner edge(s) of the blade(s) puncture the plastic covering, and in a second stage by rotating the partly closed tool the plastic covering is cut through, and in the third stage by closing the tool the tips of the splitting knife or knives puncture the wall of the inner liner, and after locking the tool, finally in a fourth stage the closed tool is rotated around the tube, thereby cutting through the inner liner, the channel that was cut through the plastic covering, and the blades sliding within it, acting as a guide.

24. Method as in claim 23,
**characterised in that**
in the case of a plastic-covered tube, in a first stage the composite tube is placed into the opened tool, and by a slow closing action the corner edge(s) of the blade(s) puncture the plastic covering, and in a second stage by rotating the partly closed tool the plastic covering is cut through, and in the second stage by slowly closing the tool and simultaneously rotating it, the tips of the splitting knife or knives cut into the wall of the inner liner and simultaneously cut through it, the channel that was cut through the plastic covering acting as a guide for the blades sliding within it.

25. Method as in claims 21 to 24,
**characterised in that**
after the plastic covering has been cut into, the partly closed tool is held in this position, and after the plastic covering has been cut through, the locking of the partly closed position is released.

## Revendications

1. Dispositif destiné à couper des tubes avec un outil (1) entourant le tube et pouvant être tourné relativement à celui-ci dans le sens circonférentiel, comportant deux moitiés de mâchoire (2, 3) réalisées de manière complémentaire et reliées entre elles sur un côté par une articulation (4) et au moins un couteau de coupe agencé dans le sens radial sur une moitié de mâchoire (2, 3), lequel est pourvu d'au moins un tranchant latéral, les deux moitiés de mâchoire (2, 3) étant chacune pourvues sur le côté opposé à l'articulation d'un dispositif d'actionnement et la profondeur de pénétration du couteau de coupe dépendant du degré de fermeture de l'outil (1) pouvant être amené d'une « position ouverte » à une « position fermée », la zone de pointe du couteau de coupe faisant saillie au-dessus du côté intérieur de la moitié de mâchoire (2, 3) et l'outil étant pourvu d'un moyen d'arrêt destiné à maintenir la position « fermée »,
**caractérisé en ce que** le dispositif d'actionnement est réalisé sous la forme d'un bras (5, 6) de chaque moitié de mâchoire (2, 3) formant un manche et le couteau de coupe sous la forme d'un couteau de coupe (7, 7'), **en ce que** la zone de pointe du couteau de coupe (7, 7') est réalisée en tant que pyramide régulière à quatre côtés, deux arêtes latérales (22, 22') à l'opposé l'une de l'autre étant situées dans le plan de coupe et la diagonale (24), située dans le plan de coupe, de la base de la pyramide étant au moins quatre fois plus longue que la diagonale (25) perpendiculaire au plan de coupe.

2. Dispositif selon la revendication 1,
**caractérisé en ce que** le moyen d'arrêt est réalisé en tant que verrou de sûreté (10).

3. Dispositif selon les revendications 1 et 2,
**caractérisé en ce que** le verrou de sûreté (10) est fixé sur un bras (6) de l'outil (1) de manière pivotante et présente un évidement (11) qui peut être pivoté dans une saillie en forme de tenon (12) agencée sur l'autre bras (5).

4. Dispositif selon l'une des revendications 1 à 3,
**caractérisé en ce que** l'outil est pourvu d'un élément de verrouillage destiné à maintenir la position « partiellement fermée ».

5. Dispositif selon les revendications 1 à 4,
**caractérisé en ce que** l'élément de verrouillage et le moyen d'arrêt coopèrent et forment ensemble un élément fonctionnel.

6. Dispositif selon l'une des revendications 1 à 5,
**caractérisé en ce qu'**un couteau de coupe (7, 7') est agencé dans chaque moitié de mâchoire (2, 3).

7. Dispositif selon la revendication 6,
**caractérisé en ce que** les deux couteaux de coupe (7, 7') se font face dans la position « fermée ».

8. Dispositif selon l'une des revendications 1 à 7,
**caractérisé en ce que**, dans le même plan que les couteaux de coupe (7, 7') dans chaque moitié de mâchoire (2, 3), il est agencé au moins une lame (8) dont la zone de pointe (31) fait saillie au-dessus du côté intérieur des moitiés de mâchoire (2, 3).

9. Dispositif selon la revendication 8,
**caractérisé en ce que** chaque moitié de mâchoire (2, 3) est pourvue de deux lames (8.1, 8.1', 8.2, 8.2') qui sont agencées à gauche et à droite du couteau de coupe (7, 7').

10. Dispositif selon les revendications 8 et 9,
**caractérisé en ce que** la section transversale de la zone de pointe (31) de chaque lame (8) est réalisée en triangle isocèle.

11. Dispositif selon les revendications 8 à 10,
**caractérisé en ce qu'**une extrémité de la lame (8) est réalisée en tant qu'arête d'angle à angle droit (32).

12. Dispositif selon la revendication 11,
**caractérisé en ce que**, dans la position « fermée », les arêtes d'angle (32) des deux paires de lames (8.1, 8.1', 8.2, 8.2') se font face.

13. Dispositif selon l'une des revendications 8 à 12,
**caractérisé en ce que** les couteaux de coupe (7) et les lames (8) sont réalisés en tant qu'éléments isolés pouvant être fixés et remplacés.

14. Dispositif selon l'une des revendications 8 à 13,
**caractérisé en ce qu'**un côté frontal de chaque moitié de mâchoire (2, 3) présente un évidement qui est pourvu de saillies (16, 17) et de trous taraudés (18).

15. Dispositif selon l'une des revendications 8 à 14,
**caractérisé en ce que** la hauteur des saillies (16, 17) correspond au moins à l'épaisseur des couteaux de coupe (7) et des lames (8).

16. Dispositif selon l'une des revendications 8 à 15,
**caractérisé en ce que** les couteaux de coupe (7) et les lames (8) présentent dans les deux zones d'extrémité un évidement (29, 30) destiné à contenir partiellement les saillies (16, 17).

17. Dispositif selon l'une des revendications 8 à 16,
**caractérisé en ce que** chaque couteau de coupe (7) et chaque lame (8) est pourvu(e) d'une fente (33) s'étendant dans le sens radial.

18. Dispositif selon la revendication 17,
**caractérisé en ce que** la fente (33) débouche dans une ouverture (34) présentant une plus grande étendue transversale.

19. Procédé pour la découpe de tubes utilisant un dispositif selon les revendications 1 à 7,
**caractérisé en ce que**, dans une première étape, le tube est placé dans l'outil ouvert et, par fermeture lente, la pointe du ou des couteaux de coupe entre en contact avec la surface du tube et, dans une deuxième étape, par fermeture de l'outil, la pointe des couteaux de coupe entaille la paroi du tube et, pour finir, après verrouillage de l'outil, dans une troisième étape, l'outil fermé est tourné autour du tube et coupe ainsi le tube.

20. Procédé selon la revendication 19,
**caractérisé en ce que**, dans une première étape, le tube est placé dans l'outil ouvert et, par fermeture lente, la pointe du ou des couteaux de coupe entre en contact avec la surface du tube et, dans une deuxième étape, par fermeture et rotation simultanées de l'outil, la pointe des couteaux de coupe pénètre en continu dans la paroi du tube et le coupe en même temps.

21. Procédé selon la revendication 19,
**caractérisé en ce que**, dans le cas d'un tube enrobé de matière plastique, dans une première étape, le tube composite est placé dans l'outil ouvert et, par fermeture lente, la pointe du ou des couteaux de coupe entre en contact avec la surface de l'enveloppe en plastique et entaille celle-ci par la poursuite de la fermeture de l'outil et, dans une deuxième étape, par rotation de l'outil partiellement fermé, l'enveloppe en plastique est découpée et, dans une troisième étape, par fermeture de l'outil, la pointe du ou des couteaux de coupe entaille la paroi du liner intérieur et pour finir, après verrouillage de l'outil, dans une quatrième étape, l'outil fermé est tourné autour du tube composite et le liner intérieur est ainsi découpé, la rainure de l'enveloppe en plastique découpée servant de guidage.

22. Procédé selon la revendication 20,
**caractérisé en ce que**, dans le cas d'un tube enrobé de matière plastique, dans une première étape, le tube composite est placé dans l'outil ouvert et, par fermeture lente et rotation simultanée de l'outil, la pointe du ou des couteaux de coupe pénètre dans l'enveloppe en plastique et la découpe en même temps et, dans une deuxième étape, par la poursuite de la fermeture et la rotation simultanée de l'outil, la pointe du ou des couteaux de coupe pénètre dans la paroi du liner intérieur et le découpe en même temps.

23. Procédé pour la découpe de tubes avec un dispositif selon les revendications 8 à 18,
**caractérisé en ce que**, dans le cas d'un tube enrobé de matière plastique, après mise en place dans l'outil et fermeture lente, dans une première étape, l'arête ou les arêtes d'angle de la lame ou des lames entaille(nt) l'enveloppe en plastique et, dans une deuxième étape, par rotation de l'outil partiellement fermé, l'enveloppe en plastique est découpée et, dans une troisième étape, par fermeture de l'outil, la pointe du ou des couteaux de coupe entaille la paroi du liner intérieur et, pour finir, après verrouillage de l'outil, dans une quatrième étape, l'outil fermé est tourné autour du tube et le liner intérieur est ainsi découpé, la rainure de l'enveloppe en plastique découpée et les lames glissant à l'intérieur servant de guidage.

24. Procédé selon la revendication 23,
**caractérisé en ce que**, dans le cas d'un tube enrobé de matière plastique, dans une première étape, le tube composite est placé dans l'outil ouvert et, par fermeture lente, l'arête ou les arêtes d'angle de la lame ou des lames entaille(nt) l'enveloppe en plastique et, dans une deuxième étape, par rotation de l'outil partiellement fermé, l'enveloppe en plastique est découpée et, dans une troisième étape, par fermeture lente et rotation simultanée de l'outil, la pointe du ou des couteaux de coupe pénètre dans la paroi du liner intérieur et le découpe en même temps, la rainure de l'enveloppe en plastique découpée servant de guidage aux lames glissant à l'intérieur.

25. Procédé selon les revendications 21 à 24,
**caractérisé en ce que**, après la pénétration de l'enveloppe en plastique, l'outil partiellement fermé est maintenu dans cette position et, après la découpe de l'enveloppe en plastique, le verrouillage de la position partiellement fermée est levé.
